Europäisches Patentamt

European Patent Office

Office européen des brevets

(19)

(11) **EP 1 003 265 A1**

(12) **EUROPÄISCHE PATENTANMELDUNG**

(43) Veröffentlichungstag:
**24.05.2000 Patentblatt 2000/21**

(51) Int Cl.[7]: **H02J 13/00**

(21) Anmeldenummer: **99810940.9**

(22) Anmeldetag: **15.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.11.1998 DE 19853347**

(71) Anmelder: **ABB RESEARCH LTD.**
**8050 Zürich (CH)**

(72) Erfinder: **Dzung, Dacfey**
**5430 Wettingen (CH)**

(74) Vertreter: **Clerc, Natalia et al**
**ABB Business Services Ltd,**
**Intellectual Property (SLE-I),**
**Haselstrasse 16/699**
**5401 Baden (CH)**

(54) **Verfahren zum Verteilen von Energie auf einem Stromversorgungsnetz**

(57)     Das Verfahren erlaubt einen effizienteren Betrieb eines Stromversorgungsnetzes (1) mit mindestens einem Anbieter (2) und mehreren Verbrauchern (3). Hierbei teilt der Anbieter (2) den Verbrauchern (3) betriebsrelevante Parameter des Netzes mit, insbesondere einen Normaltarif zum Bezug von Energie und einen Reservationstarif zum Nichtbezug reservierter Energie.

Die Verbraucher Antworten mit Informationen, aus denen sich deren zukünftiger Energiebedarf abschätzen lässt, wie z.B. einer Energiemenge, die sie zu einem reduzierten Tarif beziehen möchten. Der Anbieter (2) teilt den Verbrauchern (3) mit, ob sie die angegebene Energiemenge zum reduzierten Tarif beziehen können, und prognostiziert aus den so gewonnenen Daten den Energiebedarf.

Fig. 1

EP 1 003 265 A1

**Beschreibung**

Technisches Gebiet

Die Erfindung betrifft ein Verfahren zum Verteilen von Energie auf einem Stromversorgungsnetz sowie ein Stromversorgungsnetz gemäss Oberbegriff der unabhängigen Ansprüche.

Hintergrund

Zur optimalen Nutzung eines Stromversorgungsnetzes ist es für den Netzbetreiber und den Stromlieferanten wichtig, den zu erwartenden Stromverbrauch möglichst genau zu kennen oder zu steuern und Spitzenlasten zu vermeiden. Hierzu können verschiedene Massnahmen beitragen, wie z.B. Hoch- und Niedertarife, die Fernsteuerung von Verbrauchern durch den Stromlieferanten, usw. Die Möglichkeiten zur Steuerung bzw. Vorhersage des Stromverbrauchs bleiben jedoch beschränkt.

Darstellung der Erfindung

Es ist deshalb Aufgabe der vorliegenden Erfindung, dem Netzbetreiber bzw. dem Stromlieferanten weitere Mittel in die Hand zu geben, um den Stromverbrauch zu steuern bzw. vorauszusagen.

Diese Aufgabe wird vom Gegenstand der unabhängigen Ansprüche erfüllt.

Erfindungsgemäss findet also eine Kommunikation zwischen dem Stromanbieter und den Verbrauchern statt, in welcher für das Stromnetz betriebsrelevante Parameter ausgetauscht werden. Einerseits teilt der Anbieter den Verbrauchern einen Normaltarif zum Bezug von Energie und einen Reservationstarif für den Nichtbezug reservierter Energie mit. Diese beiden Parameter werden z.B. aus erwartetem Stromverbrauch, Betriebsaufwand und anderen technischen Zustandsgrössen des Netzes hergeleitet. Als Antwort erhält der Anbieter von mindestens einem Teil der Verbraucher Angaben, die ihm erlauben, die Resourcen des Stromversorgungsnetzes besser zu nutzen. Insbesondere handelt es sich hier um eine vom jeweiligen Verbraucher zu einem bestimmten zukünftigen Zeitpunkt gewünschte, zu einem reduzierten Tarif beziehbare Energiemenge. Die Angaben des Verbrauchers erlauben es dem Anbieter z.B., den Stromverbrauch zu einem bestimmten Zeitpunkt besser vorauszusagen und Spitzenlasten zu minimieren.

Um das System flexibler zu gestalten, kann der Anbieter dem Verbraucher auch einen Energiebereich mitteilen, innerhalb dem er Energie zum reduzierten Tarif beziehen kann, wobei der Energiebereich jenen Wert umfasst, der der Verbraucher dem Anbieter mitgeteilt hat.

Das Verfahren kann insbesondere in einem Netz verwendet werden, in welchem die Verbraucher über programmierbare Stromzähler verfügen. Den Stromzählern kann der Anbieter vorgegebene Energiemengen mitteilen, die zu einem reduzierten Preis bezogen werden können.

Vorzugsweise sind hierzu Mittel zur bidirektionalen Kommunikation zwischen Anbieter und Verbrauchern vorgesehen.

Kurze Beschreibung der Zeichnungen

Weitere Vorteile und Anwendungen der Erfindung ergeben sich aus den abhängigen Ansprüchen und aus der nun folgenden Beschreibung anhand der Figuren. Dabei zeigen:

Fig. 1 ein Blockschaltbild für ein erfindungsgemässes Stromversorgungsnetz und
Fig. 2 Kommunikationsschritte zwischen dem Anbieter und einem der Verbraucher.

Weg zur Ausführung der Erfindung

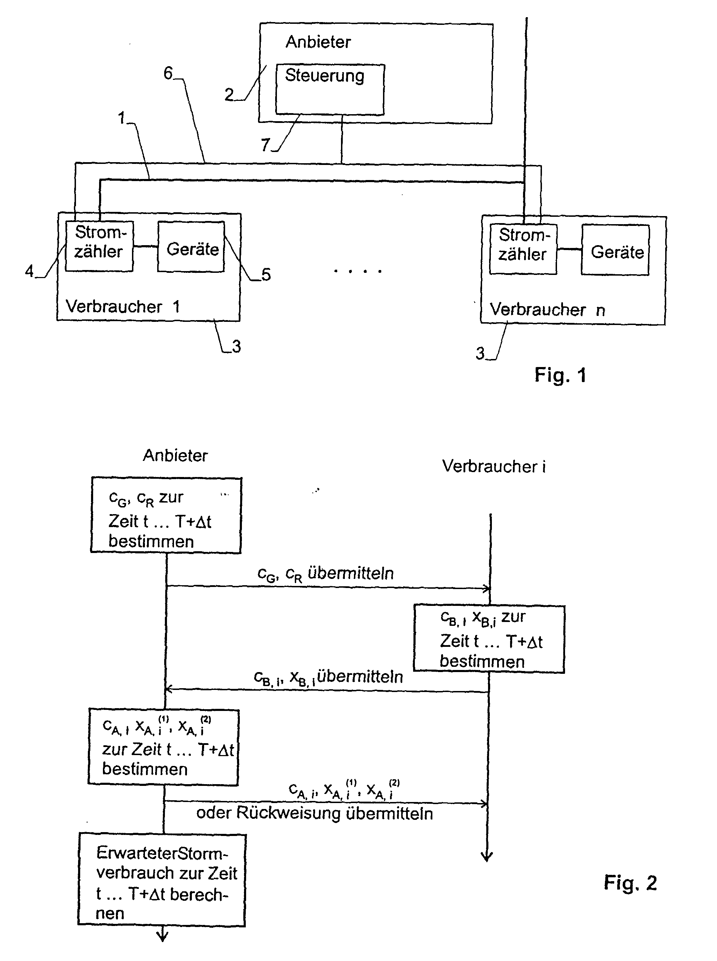

Der prinzipielle Aufbau einer Ausführung des Stromversorgungsnetzes gemäss vorliegender Erfindung ist in Fig. 1 dargestellt. Es umfasst ein Netzwerk von Stromversorgungsleitungen 1, mindestens einen Anbieter 2 und mehrere Verbraucher 3. Jedem Verbraucher 3 ist mindestens ein Stromzähler 4 zugeordnet, der den Stromverbrauch bzw. die Stromgebühren für ein oder mehrere elektrische Geräte 5 festhält.

Zusätzlich ist ein bidirektionales Kommunikationsnetzwerk 6 vorgesehen, das eine Steuerung 7 des Anbieters 2 mit den Verbrauchern 3 verbindet. Das Kommunikationsnetzwerk 6 kann als PLC-Netz ("Power Line Carrier" Netz) ausgestaltet sein, das die Leitungen 1 als Übertragungsmedium verwendet. Es ist jedoch auch denkbar, dass andere Kommunikationswege eingesetzt werden. Vorzugsweise ist das Kommunikationsnetzwerk 6 so ausgestaltet, dass es eine fälschungs- und abhörsichere Kommunikation gewährleistet. Teil des Kommunikationsnetzwerks 6 bzw. seines Kommunikationsprotokolls können auch Massnahmen sein, die eine Nachprüfung der Identität der Meldungsquellen und der Authentizität der Meldungen gewährleisten.

Um die Resourcen des Netzes optimal zu nutzen und den zu erwarteten Stromverbrauch möglichst genau abschätzen zu können, setzt der Anbieter 1 ein "bidding and reservation" System ein, welches im folgenden genauer beschrieben wird.

Das System basiert darauf, dass zwischen dem Anbieter 1 und den Verbrauchern 3 ein Informationsaustausch stattfindet, wie er in Fig. 2 dargestellt wird. Er umfasst die folgenden Schritte:

1. Der Anbieter bestimmt einen Normaltarif $c_G$ und einen Reservationstarif $c_R$ für eine Zeit t bis t+$\Delta$t, welche z.B. 24 Stunden in der Zukunft liegt und eine Zeitspanne $\Delta$t von 30 Minuten überdeckt:

- Der Normaltarif $c_G$ (z.B. in \$/kWh) ist der Preis für nicht reservierte elektrische Energie im besagten Zeitraum. Wenn der Verbraucher keine Energie reserviert oder mehr als die reservierte Energie bezieht (siehe Schritt 3, unten), wird ihm dieser Tarif verrechnet.
- Der Reservationstarif $c_R$ (z.B. ebenfalls in \$/kWh) wird verwendet, um dem Verbraucher reservierte aber nicht bezogene Energie in Rechnung zu stellen. Wenn der Verbraucher i für die Zeitspanne t ... t+$\Delta$t eine gewisse Energiemenge $x_{B,i}$ reserviert und zugesprochen erhalten hat, aber diese Energie nicht oder nur teilweise bezieht, so wird der Fehlbetrag (d.h. die Differenz zwischen der tatsächlich konsumierten Energie und der reservierten Energiemenge $x_{B,i}$) mit dem Reservationstarif $c_R$ multipliziert und dem Verbraucher belastet. Vernünftige Ansätze erfüllen die Bedingung $c_R < c_G$, und $c_R$ sollte nicht zu hoch gewählt werden, so dass der Verbraucher nicht dazu angestiftet wird, zur Kosteneinsparung unnötig Energie zu verschwenden.

Die Tarifwerte $c_G$ und $c_R$ werden den einzelnen Verbrauchern übermittelt.

2. Aufgrund der übermittelten Tarifwerte $c_G$ und $c_R$ und seinem erwarteten Stromverbrauch prüft nun jeder Verbraucher i, ob er um eine Reservation von Energie ersuchen möchte. Hierzu kann er ein Angebot einreichen, welches eine gewünschte Energiemenge $x_{B,i}$ und einen reduzierten Tarif $c_{B,i}$ enthält:

- Die gewünschte Energiemenge $x_{B,i}$ entspricht der Menge von Energie, die der Verbraucher reservieren möchte.
- Der reduzierte Tarif $c_{B,i}$ (z.B. in \$/kWh) ist der Preis, den der Verbraucher für die gewünschte Energiemenge maximal zu zahlen bereit ist, falls die Reservation akzeptiert wird.

Die gewünschte Energiemenge $x_{B,i}$ und der reduzierte Tarif $c_{B,i}$ werden an den Anbieter 2 übermittelt.

3. Der Anbieter 2 sammelt die Angebote der verschiedenen Verbraucher. Er ordnet sie nach ihrer Attraktivität (z. B. nach der Höhe der angebotenen reduzierten Tarife $c_{B,i}$). Für jedes Angebot wird sodann entschieden, ob es angenommen wird.

Falls nein, erhält der entsprechende Verbraucher eine Mitteilung, dass das Angebot zurückgewiesen wird. In diesem Falle muss der Verbraucher in der genannten Zeitspanne alle benötigte Energie zum Normaltarif $c_G$ beziehen.

Falls das Angebot des Verbrauchers i angenommen wird, so werden dem Verbraucher i ein Energiebereich $[x_{A,i}^{(1)} ... x_{A,i}^{(2)}]$ und ein effektiver Tarif $c_{A,i}$ übermittelt:

- Der effektive Tarif $c_{A,i}$ gibt den Preis an, zu welchem der Verbraucher die reservierte Energiemenge beziehen kann. Normalerweise ist der effektive Tarif $c_{A,i}$ höchstens so hoch wie der vom Verbraucher i angebotene reduzierte Tarif $c_{B,i}$. Der angebotene reduzierte Tarif kann individuell auf den jeweiligen Verbraucher i zugeschnitten und für verschiedene Verbraucher unterschiedlich sein.
- Der Energiebereich $[x_{A,i}^{(1)} ... x_{A,i}^{(2)}]$ gibt den Bereich von Energie an, den der Verbraucher i zum effektiven Tarif $c_{A,i}$ beziehen kann. Normalerweise wird gelten, dass $x_{A,i}^{(1)} \leq x_{B,i} \leq x_{A,i}^{(2)}$, da der Verbraucher sein Angebot unter der Annahme gemacht hat, dass er die Energiemenge $x_{B,i}$ zum reduzierten Tarif beziehen kann.

Bei der Verrechnung wird dabei folgenderweise vorgegangen:

- Liegt der effektive Energieverbrauch $x_i$ des Verbrauchers i unterhalb der unteren Grenze $x_{A,i}^{(1)}$, so beträgt der zu verrechnende Betrag B

$$B = x_i \cdot c_{A,i} + (x_{A,i}^{(1)} - x_i) \cdot c_R$$

- Liegt der effektive Energieverbrauch xi innerhalb des Bereichs [$x_{A,i}^{(1)}$ ... $x_{A,i}^{(2)}$], so gilt für den zu verrechnenden Betrag B

$$B = x_i \cdot c_{A,i}$$

- Liegt der effektive Energieverbrauch $x_i$ des Verbrauchers i oberhalb der oberen Grenze $x_{A,i}^{(2)}$, so beträgt der zu verrechnende Betrag B

$$B = x_i \cdot c_{A,i} + (x_i - x_{A,i}^{(2)}) \cdot c_G$$

Diese Verrechnung kann durch den Anbieter aufgrund des vom Stromzähler 4 gemessenen effektiven Energieverbrauchs xi durchgeführt werden. Hierzu meldet der Stromzähler 4 dem Anbieter 2 den Energieverbrauch im gegebenen Zeitraum über das Kommunikationsnetzwerk 6. Alternativ kann die Verrechnung auch im Stromzähler 4 selbst erfolgen, wenn diesem vom Anbieter 2 der Energiebereich [$x_{A,i}^{(1)}$ ... $x_{A,i}^{(2)}$] und der Tarif $c_{A,i}$ mitgeteilt worden sind.

Der Anbieter 2 kann die Angebote der Verbraucher dazu nutzen, den Energieverbrauch in der Zeitspanne t ... t+Δt abzuschätzen und entsprechende Generatorund Netzkapazitäten bereitzustellen bzw. Strom von anderen Anbietern anzufordern. Auch kann er die Werte der Tarife $c_G$ und $c_R$ für spätere Zeitspannen nötigenfalls anpassen. So kann er sie heraufsetzen, falls er feststellt, dass ein sehr hoher Strombedarf besteht.

Der in Fig. 2 dargestellte Ablauf bezieht sich auf den Energiebedarf in der Zeitspanne t ... t+Δt. Sobald er abgeschlossen ist, kann er von vorne beginnen, um z.B. den Energiebedarf in der Zeitspanne t+Δt ... t+2Δt zu ermitteln (wobei die "Bidding & Reservation"-Schritte jeweils z.B. 24 Stunden zum Voraus durchgeführt werden und damit der Energieverbrauch vorausgesagt werden kann).

Die anbieter- und verbraucherseitigen Schritte können automatisiert ablaufen. Anbieterseitig kann z.B. ein entsprechendes Programm in der Steuerung 7 alle notwendigen Berechnungen ausführen. Verbraucherseitig kann ein Computer vorgesehen sein, welcher Informationen bezüglich der Betriebsabläufe in zu erwartende Energieverbrauchsmengen umsetzt.

Wie eingangs erwähnt, erlaubt die vorliegende Erfindung, die Auslastung und den Betrieb eines Stromversorgungsnetzes zu optimieren. Hierzu werden zwischen dem Anbieter und den Verbrauchern betriebsrelevante und verbrauchsrelevante Angaben ausgetauscht.

Bezugszeichen:

| | |
|---|---|
| 1: | Stromversorgungsleitungen |
| 2: | Anbieter |
| 3: | Verbraucher |
| 4: | Stromzähler |
| 5: | elektrische Geräte |
| 6: | Kommunikationsnetzwerk |
| 7: | Steuerung |
| $c_{A,i}$ : | zugeteilter reduzierter Tarif |
| $c_{B,i}$: | gewünschter reduzierter Tarif |
| $C_G$: | Normaltarif |
| $c_R$: | Reservationstarif |
| $x_{A,i}^{(1)}$ ... $x_{A,i}^{(2)}$: | zugeteilte Energiemenge |
| $x_{B,i}$: | gewünschte Energiemenge |
| $X_i$: | effektiver Energieverbrauch |

**Patentansprüche**

1. Verfahren zum Verteilen von Energie auf einem Stromversorgungsnetz (1) mit mindestens einem Anbieter (2) und mehreren Verbrauchern (3), dadurch gekennzeichnet, dass

der Anbieter (2) den Verbrauchern (3) einen Normaltarif ($c_G$) zum Bezug von Energie und einen Reservationstarif ($c_R$) zum Nichtbezug reservierter Energie in einer zukünftigen Zeitspanne (t ... t + $\Delta$t) mitteilt, mindestens ein Teil der Verbraucher (3) dem Anbieter (2) mitteilen, welche Energiemenge ($x_{B,i}$) sie in der zukünftigen Zeitspanne (t ... t + $\Delta$t) zu einem reduzierten Tarif ($c_B$) beziehen möchten, und der Anbieter (2) den Verbrauchern (3) mitteilt, ob sie die Energiemenge ($x_{B,i}$) zum reduzierten Tarif ($c_{B,i}$) beziehen können.

2. Verfahren nach Anspruch 1, dadurch gekennzeichnet, dass der Anbieter (2) aufgrund der angegebenen Energiemengen ($x_{B,i}$) einen Energieverbrauch in der Zeitspanne (t ... t + $\Delta$t) ermittelt.

3. Verfahren nach einem der vorangehenden Ansprüche, dadurch gekennzeichnet, dass der Anbieter (2) den Verbrauchern (3) einen Energiebereich ([$x_{A,i}^{(1)}$ ... $x_{A,i}^{(2)}$]) mitteilt, innerhalb dem sie Energie höchstens zum reduzierten Tarif ($c_{B,i}$) beziehen können, wobei die jeweilige Energiemenge ($x_{B,i}$) innerhalb des Energiebereichs liegt.

4. Verfahren nach einem der vorangehenden Ansprüche, dadurch gekennzeichnet, dass der Anbieter (2) den Verbrauchern (3) individuelle effektive Tarife ($c_{A,i}$) zum Bezug der angegebenen Energiemenge zuteilt, wobei der jeweilige individuelle effektive Tarif höchstens so gross wie der angegebene reduzierte Tarif ($c_{B,i}$) ist.

5. Verfahren nach einem der vorangehenden Ansprüche, dadurch gekennzeichnet, dass bei jedem Verbraucher (3) ein Stromzähler (4) vorgesehen ist, dessen gültiger Tarif vom Anbieter (2) gesteuert wird, wobei der Anbieter (2) dem Stromzähler (4) die zum reduzierten Tarif beziehbare Energiemenge mitteilt.

6. Verfahren nach einem der Ansprüche 1 - 4, dadurch gekennzeichnet, dass bei jedem Verbraucher (3) ein Stromzähler (4) vorgesehen ist, welcher die in der Zeitspanne (t ... t + $\Delta$t) konsumierte Energie dem Anbieter (2) übermittelt.

7. Stromversorgungsnetz mit mindestens einem Anbieter (2) und mehreren Verbrauchern (3), wobei bei jedem Verbraucher (3) mindestens ein steuerbarer Stromzähler (4) angeordnet ist, dadurch gekennzeichnet, dass eine Energiezuteilungs-Steuerung (7) vorgesehen ist, welche ausgestaltet ist, aufgrund gewünschter Energiemengen ($x_{B,i}$) der Verbraucher (3) den Stromzählern (4) vorgegebene Energiemengen ([$x_{A,i}^{(1)}$ ... $x_{A,i}^{(2)}$]) und reduzierte Tarife ($c_{A,i}$) mitzuteilen, wobei die Stromzähler (4) ausgestaltet sind, die vorgegebenen Energiemengen zu den reduzierten Tarifen ($c_{A,i}$) zu verrechnen.

8. Stromversorgungsnetz nach Anspruch 7, gekennzeichnet durch bidirektionale Kommunikationsmittel (6) zwischen den Verbrauchern und dem Anbieter.

9. Stromversorgungsnetz nach einem der Ansprüche 7 oder 8, dadurch gekennzeichnet, dass die Energiezuteilungs-Steuerung (7) ausgestaltet ist zur Vorhersage eines Energieverbrauchs aufgrund der gewünschten Energiemengen($x_{B,i}$) der Verbraucher (3).

Anbieter

Steuerung

6

2

1

4

Stromzähler

Geräte

5

Verbraucher 1

3

. . . .

Stromzähler

Geräte

Verbraucher n

3

7

**Fig. 1**

Anbieter

Verbraucher i

$c_G$, $c_R$ zur
Zeit t ... T+Δt
bestimmen

$c_G$, $c_R$ übermitteln

$c_{B,i}$ $x_{B,i}$ zur
Zeit t ... T+Δt
bestimmen

$c_{B,i}$, $x_{B,i}$ übermitteln

$c_{A,i}$ $x_{A,i}^{(1)}$, $x_{A,i}^{(2)}$
zur Zeit t ... T+Δt
bestimmen

$c_{A,i}$, $x_{A,i}^{(1)}$, $x_{A,i}^{(2)}$
oder Rückweisung übermitteln

ErwarteterStormverbrauch zur Zeit
t ... T+Δt berechnen

**Fig. 2**

**Europäisches Patentamt**

# EUROPÄISCHER RECHERCHENBERICHT

Nummer der Anmeldung

EP 99 81 0940

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | FR 2 705 841 A (SINERGY SA) 2. Dezember 1994 (1994-12-02) * das ganze Dokument * --- | 1,7 | H02J13/00 |
| A | US 5 237 507 A (CHASEK NORMAN E) 17. August 1993 (1993-08-17) * das ganze Dokument * --- | 1,7 | |
| A | DE 196 12 776 A (SEL ALCATEL AG) 2. Oktober 1997 (1997-10-02) * das ganze Dokument * --- | 1,7 | |
| A | DE 195 02 786 A (DAIMLER BENZ AG ;AEG HAUSGERAETE GMBH (DE)) 8. August 1996 (1996-08-08) * das ganze Dokument * --- | 1,7 | |
| A | US 4 136 393 A (FOX RICHARD Q) 23. Januar 1979 (1979-01-23) * das ganze Dokument * ----- | 1,7 | |

RECHERCHIERTE SACHGEBIETE (Int.Cl.7)

H02J

Der vorliegende Recherchenbericht wurde für alle Patentansprüche erstellt

| Recherchenort | Abschlußdatum der Recherche | Prüfer |
|---|---|---|
| DEN HAAG | 7. Februar 2000 | Kelperis, K |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 81 0940

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-02-2000

| Im Recherchenbericht angeführtes Patentdokument | | Datum der Veröffentlichung | Mitglied(er) der Patentfamilie | | Datum der Veröffentlichung |
|---|---|---|---|---|---|
| FR 2705841 | A | 02-12-1994 | KEINE | | |
| US 5237507 | A | 17-08-1993 | KEINE | | |
| DE 19612776 | A | 02-10-1997 | AU | 2697597 A | 22-10-1997 |
| | | | WO | 9737420 A | 09-10-1997 |
| DE 19502786 | A | 08-08-1996 | KEINE | | |
| US 4136393 | A | 23-01-1979 | JP | 1087273 C | 26-02-1982 |
| | | | JP | 54021543 A | 17-02-1979 |
| | | | JP | 56028090 B | 29-06-1981 |

EPO FORM P0461

Für nähere Einzelheiten zu diesem Anhang : siehe Amtsblatt des Europäischen Patentamts, Nr.12/82